# EUROPEAN PATENT SPECIFICATION

(11) **EP 4 341 160 B1**
(45) Date of publication and mention of the grant of the patent: **02.07.2025**
(21) Application number: 22736319.9
(22) Date of filing: 19.05.2022
(51) Int. Cl.: B64D 1/02, B64F 1/20, H02G 1/02, H02G 7/00, B64C 27/04, B64C 39/02

(54) **METHOD AND DEVICE FOR SECURING OBJECTS TO AN AERIAL LINE**
VERFAHREN UND VORRICHTUNG ZUR BEFESTIGUNG VON OBJEKTEN AN EINER LUFTLEITUNG
PROCÉDÉ ET DISPOSITIF DE FIXATION D'OBJETS SUR UNE LIGNE AÉRIENNE

(30) Priority: 21.05.2021 FI 20215605
(43) Date of publication of application: 27.03.2024
(73) Proprietor: KULJETUSLIIKE PENTTI ÄIJÄLÄ OY, 92500 Rantsila (FI)
(72) Inventor: ÄIJÄLÄ, Jarno, 92500 Rantsila (FI); ÄIJÄLÄ, Aarno, 92500 Rantsila (FI); ÄIJÄLÄ, Arto, 92500 Rantsila (FI); ÄIJÄLÄ, Tuomo, 92500 Rantsila (FI); ÄIJÄLÄ, Marko, 92500 Rantsila (FI)
(74) Representative: Berggren Oy
(86) International application number: PCT/FI2022/050342
(87) International publication number: WO 2022/243606

(56) References cited:
- WO-A1-2019/171231
- WO-A1-2020/159384
- WO-A1-2020/180190
- US-A- 5 467 730
- US-A- 5 901 435

## Description

### Field of the invention

The invention relates to a device for securing objects, such as reflectors or measuring instruments, to an aerial line, which device comprises a frame, a suspension member for suspending from a flight device, connecting members for connecting to the aerial line and an installation mechanism for securing at least one object to the aerial line. The invention further relates to a method for securing objects, such as reflectors or measuring instruments, to an aerial line with the device according to the invention.

### Prior art

Electricity is transferred from power plants to substations and to consumers along power lines. The power lines can be either aerial lines or underground cables. Aerial lines are most often used as power lines due to their lower cost and better serviceability. For safety reasons, aerial lines are placed high from the ground, supported on poles. For example in Finland, the minimum distance of a 400 kV aerial line from the road surface is over 10 m. The height of the aerial line poles is typically 20-30 m and the distance between the poles 200-300 m. In difficult terrain with varying surface shapes, the height of the poles and the distance between them can be substantially larger.

Aerial lines placed high up are difficult to detect, which causes birds to often collide with them. Aerial lines are also dangerous for low-flying airplanes. Reflectors and/or other objects promoting detection can be secured to the aerial lines to facilitate their detection. Securing reflectors and/or other objects to the aerial lines from the ground is practically impossible due to the high position of the aerial lines.

A helicopter can be used to aid with the securing of the reflectors. The person securing the reflectors thus sits in the helicopter, secures the objects onto the end of a long rod and transfers the object onto the aerial line by moving the rod by hand. Due to the limited length of the rod, the helicopter must fly quite close to the aerial line, which makes the installation work dangerous. Installing the objects on the aerial line one by one is further slow, which adds to the costs of the installation work.

Small unmanned, radio-controlled flight devices, so-called drones, are also used for securing the reflectors. Guiding the drones precisely by the high aerial line is difficult.

Drones also have a very limited carrying capacity, wherefore reflectors must often be retrieved from the ground, which slows down the installation work. The use of drones is difficult in difficult terrain, because the drone controller must be able to move on the ground surface in the immediate vicinity of the reflector securing point as the installation work advances along the power line.

Publication WO 2020/159384 A1 describes a device attachable to a drone for securing objects to a power line. The object to be secured to a power line comprises two hemisphere-shaped parts, which are connected together with a screw 12. The drone is flown close to the power line, so that the power line is situated in the gap between the halves of the object. Thereafter, the object halves are tightened against each other, whereby the object is secured to the power line.

Publication WO 2019/171231 A1 describes a method and a system for securing a device to a power line. The system comprises a flight device (drone), to which an installation part has been attached, which carries a device to be secured to a power line. The device to be secured to the power line has a cable groove, into which the power line is fitted during the securing phase. The device is secured to the power line with the aid of turning latches in the device, which close the cable groove.

Publication WO 2020/180190 A1 describes a device for connecting an aircraft warning marker to a power line, said device being connectable to a helicopter, wherein the device comprises a release mechanism adapted to clamp two halves of the aircraft warning marker together to a closed position around the power line by means of gravity.

An object of the invention is to provide a method and a device for securing an object to an aerial line, with which problems related to prior art can be reduced.

The objects of the invention are obtained with a method and a device, which are characterized in what is presented in the independent claims. Some advantageous embodiments of the invention are presented in the dependent claims.

### Brief summary of the invention

The invention relates to a device for securing reflectors advantageously to an aerial line of a power line. The device comprises a frame, a suspension member for suspending from a flight device, connecting members for connecting to the aerial line and an installation mechanism for securing at least one reflector to the aerial line. The installation mechanism comprises a group of moveable holders for receiving, carrying, and releasing reflectors, wherein the number of said holders is dimensioned for loading several reflectors into the device at once. The device further comprises a gripping station, where the securing of the reflector to the aerial line is arranged to occur. Said holders are at a distance from the gripping station and can be moved to the gripping station for securing the reflector, and said connecting members comprise a gliding surface, which gliding surface has a first end and a second end, and said gripping station is at the first end of the gliding surface and the first side of the gliding surface has a first side plate and the second side has a second side plate, so that the gliding surface and the side plates form a trough, into which trough the aerial line can be fitted.

In one advantageous embodiment of the device according to the invention, said installation mechanism comprises remote-controllable or at least partly automatic transfer means for moving the holders. The remote-controlling is advantageously implemented with radio-controlled devices.

In a second advantageous embodiment of the device according to the invention, said transfer means comprise at least one unending chain, onto which chain the holders are arranged at a distance from each other and which chain has a movement path, which has a point which is tangential to or runs close to the gripping station. Said transfer means advantageously comprise two parallel unending chains, onto which chains holders have been arranged at a distance from each other, so that the holders are substantially aligned on said parallel chains.

In a third advantageous embodiment of the device according to the invention, said transfer means comprise at least two rotation axles, around which the chain/chains are arranged to rotate and a motor for rotating the chain/chains.

In still another advantageous embodiment of the device according to the invention, said suspension member comprises a shaped rod, which rod has a first end and a second end, which ends are attached to the first side plate at a distance from each other when seen in the longitudinal direction of said trough.

In still another advantageous embodiment of the device according to the invention, the edge of the second side plate has a guide plate, which guide plate is in a slanted position in relation to the second side plate, turning away from the first side plate.

In still another advantageous embodiment of the device according to the invention, the gliding surface has a sensor for measuring a load directed at the gliding surface and indicator means for indicating the measured load to the device user. Said indicator means advantageously comprise at least one light-emitting indicator light, the wavelength of the light of which is arranged to be determined based on the magnitude of the measured load.

Still another advantageous embodiment of the device according to the invention further comprises distance measuring means for measuring the distance the device has moved along the aerial line.

Still another advantageous embodiment of the device according to the invention further comprises a magazine for storing reflectors and for feeding the installation mechanism.

The invention further relates to a method for securing objects, such as reflectors or measuring instruments, to an aerial line with a device, which comprises a frame, a suspension member for suspending from a flight device, connecting members for connecting to the aerial line and an installation mechanism for securing at least one object to the aerial line. In the method, objects are loaded into said device, said device is suspended from a flight device, the flight device is flown above the aerial line, said device is connected to the aerial line and a first object is secured with the device to the aerial line at a first securing point. Said connecting members comprise a gliding surface, a first side plate on the first side of the gliding surface and a second side plate on the second side, so that the gliding surface and side plates form a trough, and in the method, the device is connected to the aerial line by moving the device in relation to the aerial line into a position, where the aerial line is placed in said trough, the device connected to the aerial line is moved along the aerial line to a second securing point at a distance from the first securing point and a second object is secured with the device to the aerial line at the second securing point. During the move from the first securing point to the second securing point, the aerial line is in the trough and glides along the gliding surface. The method is advantageously used for securing reflectors or other objects promoting the detection of the aerial line to an aerial line of a power line. Alternatively or additionally, the method can be used for securing measuring instruments measuring conditions, behaviours and/or stresses, such as vibration sensors, to the aerial line.

In one advantageous embodiment of the method according to the invention, the device connected to the aerial line is moved along the aerial line from the securing point of the last secured object to the next securing point at a distance from the securing point of the last secured object and the next object is secured with the device to the aerial line at the next securing point. This can be continued until a desired number of objects has been secured to the aerial line. The area of an aerial line between two adjacent poles can thus be equipped with a desired number of objects without detaching the connection between the device and the aerial line in between.

In a second advantageous embodiment of the method according to the invention, said installation mechanism is configured to secure objects to the aerial line automatically at a desired distance from each other as the device moves along the aerial line. The device user can freely select and set the distance between the object securing points.

In a third advantageous embodiment of the method according to the invention, the lifting force directed by said device onto the aerial line is measured, when the device is moved along the aerial line, and if necessary, the device is lifted or lowered in order to keep the desired lifting force directed onto the aerial line.

In still another advantageous embodiment of the method according to the invention, the device is suspended from a flight device with a substantially rigid bar, and the angle between the bar and device is adjusted, when the device is moved along the aerial line.

An advantage of the invention is that it significantly speeds up the installation of objects onto aerial lines, because the device does not need to be reconnected to the aerial line for each object to be installed. A large number of objects to be secured onto an aerial line can be loaded into the device at a time, advantageously several dozens of objects, whereby the device can operate for a long time without reloading. This generates savings in the installation costs.

An advantage of the invention is further that it significantly increases installation work safety, because the flight device used in the installation work can be flown at a safe distance from the aerial lines.

### Brief description of the drawings

In the following, the invention will be described in detail. In the description, reference is made to the enclosed drawings, in which
figure 1a shows as an example a device according to the invention seen diagonally from above from a first direction,
figure 1b shows the device shown in figure 1a seen diagonally from above from a second direction,
figure 2 shows the device shown in figures 1a and 1b seen from the side,
figures 3a-3c show a part of the device shown in figures 1a, 1b and 2 seen from different directions and
figure 4 shows the securing of objects to an aerial line with the method according to the invention.

### Detailed description of the invention

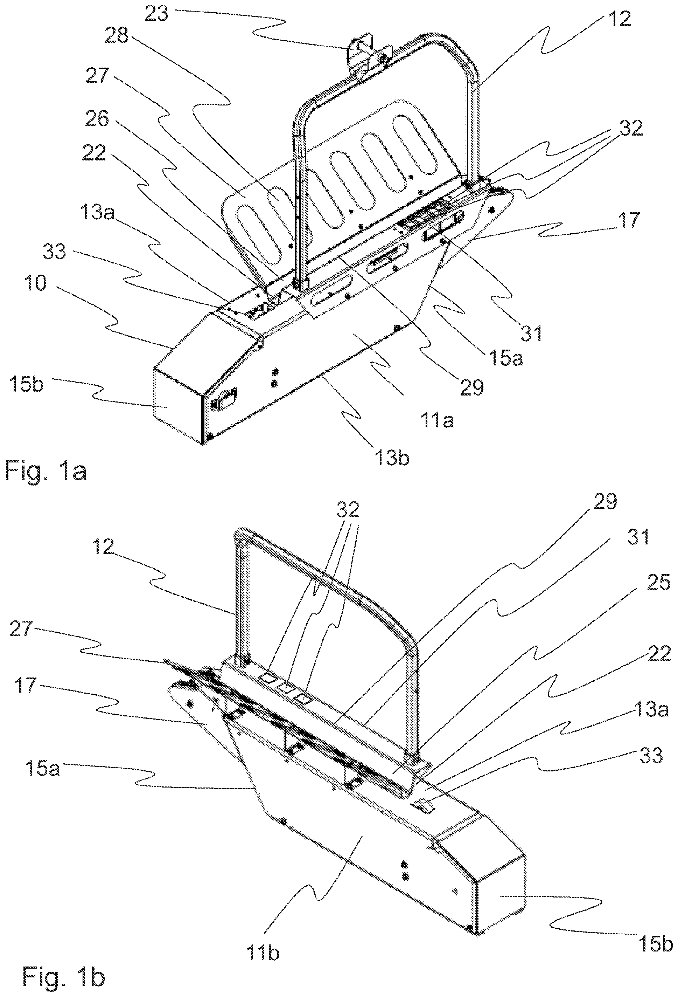

Figure 1 shows as an example a device according to the invention seen diagonally from above, from a first direction, and figure 1b shows the same device seen diagonally from above, from a second direction. In the following both figures are described simultaneously.

The device has an elongated casing-like frame 10, which has a first side wall 11a, a second side wall 11b, an upper side 13a, a lower side 13b and a first end 15a and a second end 15b. The casing-like frame is manufactured from a thin metal plate, advantageously a steel sheet.

On the upper side of the frame, there is a part shaped from a metal plate, which comprises a rectangular gliding surface 22, on the first side of which there is a first side plate 25 and on the second side of which there is a second side plate 26. The side plates are substantially parallel and substantially at a right angle against the gliding surface, so that the gliding surface and the side plates together form an elongated trough. The width of the gliding surface, i.e. the distance between the side plates, is dimensioned so that it is larger than the diameter of electrical wires used in common aerial lines of power lines.

The edge of the second side plate 26 bends at an angle 21 (figure 1a) away from the first side plate 25, forming a guide plate 27 in the free edge of the second side plate, which guide plate is in a slanted position in relation to the second side plate 26. The guide plate has a group of lightening holes 28 in a line at a distance from each other. The first side plate 25 bends at the first fold 29 to the side away from the second side plate substantially into a parallel position with the gliding surface 22, and at the second fold 31 down substantially into a right angle against the gliding surface. The first and second side plate 25, 26, the gliding surface 22 connecting them and the guide plate 27 together form a unified part, which is attached to the upper side 13a of the frame, so that the first end of the gliding surface extends to the front of the first end 15a of the frame and the second end of the gliding surface extends close to the second end of the frame.

To the first side plate 25 has been attached a suspension member 12, with the aid of which the device can be attached to a flight device, such as a helicopter. The suspension member is a substantially U-shaped metal bar, which has two substantially parallel straight vertical parts and a horizontal part connecting them. The vertical parts of the suspension member are attached at their ends to the part of the first side plate between the first and second fold 29, 31, so that the vertical parts are side by side at a distance from each other, substantially parallel with the first side 11a. The second ends of the vertical parts turn in the direction of the second side 11b, so that the horizontal part of the suspension member is substantially halfway between the imaginary planes defined by the first and second side 11a, 11b of the frame and parallel with the gliding surface 22. The horizontal part of the suspension member has an attaching loop 23 for attaching to a cable, rope or bar hanging from the flight device.

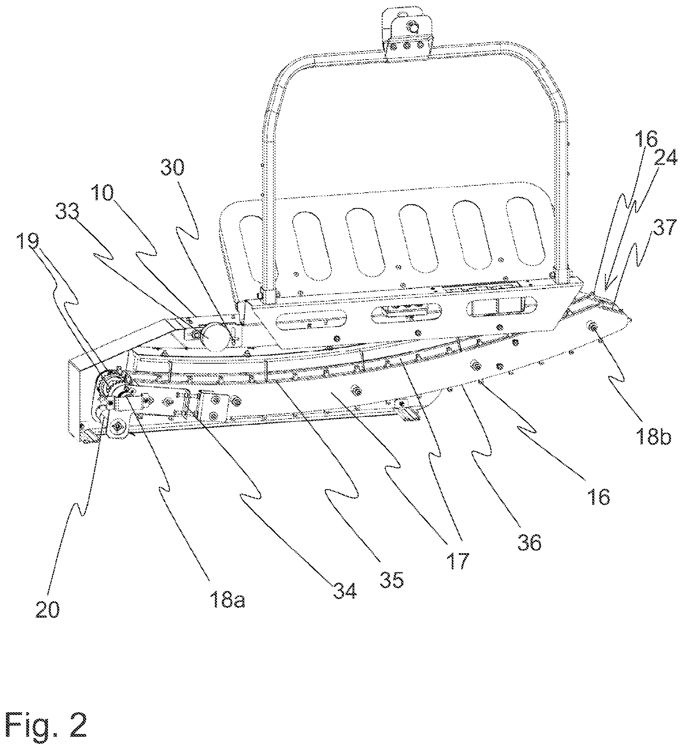

The first and second side plate 25, 26 and the gliding surface 22 connecting them form connecting means, with which the device is connected to the aerial line. Connecting to the aerial line in this presentation means that the device is moved in relation to the aerial line into a position, where the aerial line is placed into the trough defined by the side plates 25, 26 and the gliding surface 22 and the aerial line is supported on the gliding surface substantially over the entire length of the gliding surface. On the upper side 13 of the casing-like frame there is a sensor 30 (figure 2), with which the force directed at the upper side of the device and the gliding surface by the aerial line is measured. The sensor comprises a weight roll 33, which can be rotated, which extends via a hole in the upper side partly outside the frame. The main part of the sensor is inside the frame. As the aerial line presses against the weight roll, the weight roll moves inside the frame and the sensor measures the force directed at the weight roll. Inside the frame there is a control device not seen in the figures, to which the force measured by the sensor is relayed in real time. The magnitude of the force depends on how much and with how big a force the device is lifted up when the aerial line is placed in the trough, i.e. on how long a part of the aerial line the device carries at any time. As the device moves along the aerial line, the weight roll rotates and simultaneously measures the distance the device travels along the aerial line. The sensor relays the information regarding the measured distance to the control device, which utilizes it for controlling the operation of the installation mechanism in a manner described below.

Outside the frame there are three indicator lights 32, with the aid of which the magnitude of the force directed by the aerial line at the device is indicated to the device user. The first indicator light is arranged to emit a light when the aerial line touches the weight roll 33, but the force directed by the aerial line at the weight roll is smaller than what would be optimal for the use of the device. The second indicator light is arranged to emit a light when the aerial line presses the weight roll and the force directed by the aerial line at the weight roll is in the optimal range for the use of the device. The third indicator light is arranged to emit a light when the aerial line presses the weight roll, but the force directed by the aerial line at the weight roll is larger than what would be optimal for the use of the device. The first, second and third indicator light emit different coloured lights, i.e. the wavelength of the light emitted by the indicator lights is varying. The light emitted by the first indicator light can for example have a yellow colour, the light emitted by the second indicator light can be green and the colour of the light emitted by the third indicator light can be red. The control device regulates the turning on and turning off of the indicator lights based on the load data measured by the sensor. The indicator lights are placed in a row in the first side plate 25, in the section between the first and second fold 29, 31, so that the indicator lights are visible when looking at the device from above, i.e. from the direction of the upper side. When the device is being used, it is suspended on a cable or rope from a flight device, whereby the indicator lights are clearly detectable when seen from the direction of the flight device.

The device includes an installation mechanism, with the aid of which objects, such as reflectors, are secured to an aerial line. The installation mechanism comprises two parallel chain bars 17, along a groove in the outer edges of which a chain rotates (figure 2). The first ends of the chain bars extend through a hole in the first end of the frame to the outside of the frame. The protruding ends of the chain bars define the gripping station 24, where the objects in the device are secured to the aerial line. The gripping station is situated in the end of the device, at a short distance from the first end of the gliding surface.

Figure 2 shows the device shown in figure 1a and 1b seen from the side. In order to reveal the internal structure of the device frame, the first side wall, the lower side and first end have been removed.

The object installation mechanism belonging to the device, which is situated mainly inside the frame, comprises two parallel chain bars 17. The chain bars are elongated, curved plate-like parts, on the outer edges of which there is a groove, along which an unending chain 16 rotates. In figure 2, only every fifth chain loop is shown from both chains, but in reality, the chain is one unified unending part. In the first end of the chain bars, there is a first rotation axle 18a, around which two gear wheels 19 have been fitted, which gear wheels settle in the movement path of the chains. The first rotation axle 18a is rotated with a motor 20, the use of which is controlled with a controlled device not shown in the figures. The motor is advantageously an electric motor. The device according to the invention can be equipped with a battery, from which the motor receives its driving force. Alternatively, the motor can be connected with an electrical cord to a power source external from the device. The external power source can be in the flight device carrying the device, whereby the driving force of the motor is obtained from the flight device. In the second end of the chain bars, there is an imaginary second rotation axle 18b. When the motor is used, the motor rotates the gear wheels attached to the first rotation axle, whereby the chains rotate around the rotation axles. In the first end of the chain bars, there is a chain tensioner 34, with which the distance between the first rotation axle and the chain bars can be altered in order to adjust the tension of the chains.

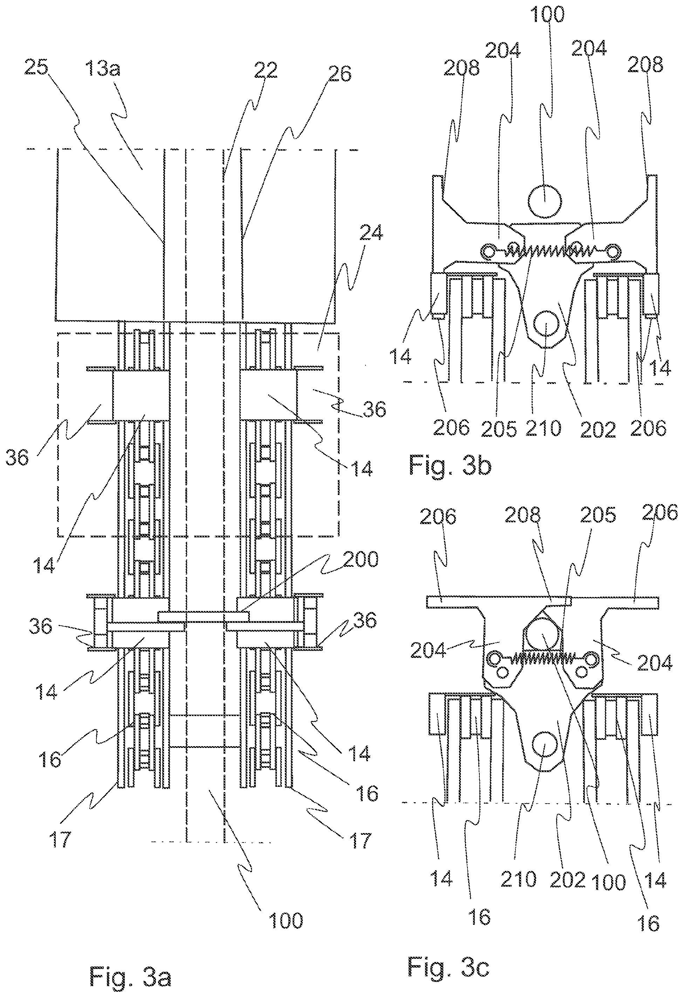

The chain bar chains have holders 14 (figure 3a) at a distance from each other, which are not shown in the figures, in which holders objects can be placed in a detachable manner, which objects are secured to the aerial line with the device. The chain bars have two curved edges with substantially the same shape, an upper edge 35 and a lower edge 36, and a substantially straight end edge 37 connected to the upper edge and lower edge in the second end of the chain bars. The end edge and part of the section of the upper edge connected thereto are outside the casing-like frame. This upper section of the chain bars forms a gripping station 24, where an object carried by holders is secured to an aerial line and immediately thereafter detaches from the holders. The chain bars 17, chains 16 and motor 20 together form transfer means, with which the holders and the objects carried by them are moved in the direction of the movement path of the chains, so that the holders and the objects carried by them pass by the gripping station.

Figures 3a, 3b and 3c show the second ends of the chain bars 17 belonging to the device shown in figures 1a, 1b and 2, which second ends push outside the frame. Figure 3a shows the second ends of the chain bars from above, seen from the direction of the upper side 13a, and figures 3b and 3c show the ends of the chain bars seen from the end of the device. Figure 3a shows the gripping station 24, where the object carried by the device is secured to the aerial line. In the following all the figures are described simultaneously.

Holders 14 have been attached to the chains 16 rotating along the edges of the chain bars 17, for receiving, carrying and releasing objects 200. The objects to be installed with the device are members known as such, which have a gripping part and a functional part attached to the gripping part, preferably a reflector. The gripping part has a plate-like base 202, to which two latches with a T-shaped cross-section have been attached in an articulated manner. The latches have an arm 204, a holding tongue 206 turning in an angle from the first end of the arm and a gripping tongue 208 turning in the other direction. The latches are attached from the second end of the arm in an articulated manner to the base, and to each other with a spring 205. Only the gripping part of the object is shown in the figures. The base of the gripping part has a hole 210 for suspending a desired functional part.

The gripping part can be set up in the standby position according to Figure 3b, where the latch arms are substantially in the same straight line and the holding tongues 206 are substantially in a parallel position side by side at a distance from each other. Holders 14 have been attached to the chain bar chains at intervals from each other, which holders comprise a slot 36, in which the holding tongue can be installed with a tight fitting. The holders are placed in the chains aligned with each other, so that the slots of adjacent holders are side by side. A gripping part in the standby position can thus be placed in the holders in such a way that the first holding tongue of the gripping part settles in a slot 36 of the holder in the first chain 16 and the second holding tongue settles in a slot of the holder in the second chain.

When objects are secured to an aerial line with the device, the device is connected to the aerial line 100 by fitting the aerial line into the trough delimited by the first side plate 25, the second side plate 26 and the gliding surface 22, against the gliding surface 22. Thereafter, the device is moved along the aerial line, so that the gripping station 24 is at the rear of the moving device. When it is desired to secure an object to the aerial line, the control device starts the motor for a short time (figure 2), whereby the chains 16 rotate a predetermined distance around the rotation axles. At the same time, the holders on the upper surface of the chain bars and the objects 200 carried by them move from the end of the chain bars toward the gripping station 24 in the first end of the gliding surface. While moving to the gripping station, the objects simultaneously move toward the aerial line. As the aerial line presses against the base 202 of the gripping part, the base is pushed down, whereby the latches turn due to the force of the spring 205 toward each other around the aerial line, in a manner shown in figure 3c. The object has thus been released from the holders and secured to the aerial line. The device is continuously moved forward along the aerial line, and at the same time, the weight roll rotated by the aerial line measures the distance the device has moved along the aerial line. When the device has moved a predetermined distance from the previous object securing point, the control device starts the motor for a while again, whereby the next object is released from the chains and secured to the aerial line. The objects are thus secured from the device to the aerial line automatically as controlled by the control device, when the device moves along the aerial line. The device user, who can be a flight device controller, can set into the control device a desired distance between subsequent objects to be secured to the aerial line.

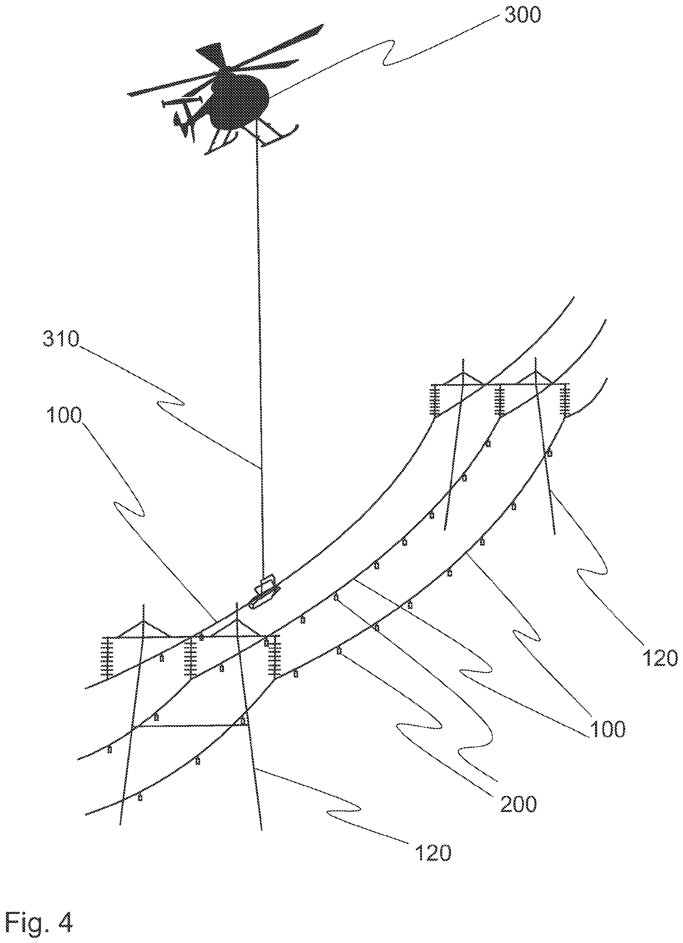

Figure 4 shows as an example the securing of objects to an aerial line 100 with the method according to the invention. The aerial line shown as an example in the figure is an aerial line of a power line, and the objects to be secured to the aerial line are reflectors. In the method, reflectors are first loaded into the device, i.e. the gripping parts of the reflectors are set in a standby position and attached to the holders of the device. It is expedient to load as many reflectors into the device at a time as can fit, i.e. a gripping part carrying a reflector is set in all holders of the device. The number of holders in the installation mechanism is dimensioned so that several, advantageously several dozens of reflectors can be loaded into the device at once. The device is suspended with the aid of a rope 310, a cable or a rigid bar from a flight device 300, advantageously a manned helicopter. The rigid bar is advantageously a carbon fibre bar with a telescopic structure. The flight device is flown above the aerial line 100 and the device is connected to the aerial line. Connecting here means that the device is moved by changing the position of the flight device and/or my adjusting the length of the rope or bar, so that the aerial line 100 settles against the gliding surface of the device. Thereafter the device is moved along the aerial line, so that the aerial line remains connected to the device during the movement of the device.

The reflector is secured to the aerial line by starting the motor which moves the holders, whereby the reflector in line to be secured moves to the gripping station of the device, where it is released from the holders and secured to the aerial line in the manner described above. The aerial line gliding along the gliding surface rotates the weight wheel, which measures the distance from the object securing point. When the aerial line has glided on the gliding surface a predetermined distance, the control mechanism automatically starts the motor for a short while, whereby the next reflector is secured to the aerial line. A desired distance between object securing points can be set into the control mechanism, whereby the control mechanism takes care of the operation of the motor releasing the reflectors automatically. The distance between the reflector securing points can be for example 20-30 meters. In the method, several reflectors are secured to the aerial line at desired intervals, while the aerial line is all the time connected to the device. Advantageously, all the reflectors to be set in the distance between two poles 120 of the aerial line are secured in place without intermittently detaching the connection between the aerial line and the device.

When arriving at a pole, the device is disconnected from the aerial line and reconnected to the aerial line after passing the pole. The calculator in the device counts the number of uninstalled reflectors remaining in the device. If the number of reflectors in the device is clearly smaller than the number of reflectors to be installed in the next pole interval, the device can be landed for reloading before reconnecting to the aerial line.

The installation mechanism of the device used in the method is controlled by remote-controlling from the aircraft in order to secure the objects to a desired point of the aerial line. During the installation work, the lifting force directed by said device to the aerial line is measured, when the device is moved along the aerial line 100. The force directed to the aerial line is monitored from the flight device with the aid of the colour of the indicator lights in the device. If the indicator light indicates that an excessively large lifting force is directed to the aerial line by the device, the device is lowered. Correspondingly, if an excessively small force is directed to the aerial line by the device, the device is lifted up. Lifting and lowering the device can be done by altering the flying height of the flight device and/or by adjusting the length of the rope or bar.

In the device described above, the objects are fitted into the holders of the device, i.e. only a number of objects that corresponds to the number of holders can be loaded into the device at once. When all the objects have been installed into place on the aerial lines, a new batch of objects must be loaded into the device. The device is landed for the duration of the loading of objects.

In an advantageous embodiment of the invention, the device has three parallel, substantially similar object installation mechanisms, into each of which substantially the same number of objects to be secured to the aerial line can be loaded. The installation mechanisms are arranged side by side inside the casing-like frame of the device. This embodiment has one set of connecting members as described above, which is attached to be sideways moveable on the upper side of the device frame. The connecting members can be moved sideways, so that they can settle in turn in line with each parallel installation mechanism. This advantageous embodiment of the invention is used so that the connecting members are first adjusted to be aligned with the first installation mechanism and the device is used to secure to the aerial line all the objects loaded into the first installation mechanism. Thereafter the connecting members are moved to the second installation mechanism and the device is used to secure to the aerial line the objects loaded into the second installation mechanism. Finally, the connecting members are moved to the third installation mechanism and the device is used to secure to the aerial line the objects loaded into the third installation mechanism. The connection between the device and the aerial line is detached during the moving of the connecting member, i.e. the device is moved apart from the aerial line, to the side of or above the aerial line.

In a second advantageous embodiment of the invention, the device is equipped with a magazine, in which a large number of objects can be stored in the standby position. The installation mechanism of the device is arranged to move a new object from the magazine to a holder, when the object that was in the holder has been secured to the aerial line. In this advantageous embodiment of the invention, a large number of objects can be loaded at once, whereby the loading interval of the objects is longer.

In an advantageous embodiment of the method according to the invention, the device is suspended from a flight device with the aid of a rigid bar and a connecting joint and an angle motor is arranged in the connecting point between the bar and the suspension member of the device, with which the angle between the bar and the longitudinal direction of the device is adjusted. In this embodiment, the aim is to keep the gliding surface of the device substantially in a parallel position in relation to the aerial line on different sides of the device. This embodiment of the method is especially suited for use is aerial lines, the longitudinal direction of which differs significantly from the horizontal direction. Such aerial lines are for example aerial lines in mountain ranges or steep hills.

Some advantageous embodiments of the method and device according to the invention have been described above. The invention is not limited to the solutions described above, but the inventive idea can be applied in different ways within the scope of the claims.

| | | | |
|---|---|---|---|
| **List of reference numbers:** | | 31 | second fold |
| 10 | body | 32 | indicator light |
| 11a | first side | 33 | weight roll |
| 11b | second side | 34 | chain tensioner |
| 12 | suspension member | 36 | slot |
| 13a | upper side | 100 | aerial line |
| 13b | lower side | 120 | pole |
| 14 | holder | 200 | object |
| 15a | first end | 202 | base |
| 15b | second end | 204 | arm |
| 16 | chain | 205 | spring |
| 17 | chain bar | 206 | holding tongue |
| 18a | first rotation axle | 208 | gripping tongue |
| 18b | second rotation axle | 300 | flight device |
| 19 | gear wheel | 310 | rope |
| 20 | motor | | |
| 21 | angle | | |
| 22 | gliding surface | | |
| 23 | attaching loop | | |
| 24 | gripping station | | |
| 25 | first side plate | | |
| 26 | second side plate | | |
| 27 | guide plate | | |
| 28 | lightening hole | | |
| 29 | first fold | | |
| 30 | sensor | | |

## Claims

1. A device for securing reflectors (200) to an aerial line (100), which device comprises a frame (10), a suspension member (12) for suspending from a flight device, connecting members for connecting to an aerial line (100), an installation mechanism for securing at least one reflector (200) to an aerial line (100), which installation mechanism comprises a group of moveable holders (14) for receiving, carrying and releasing reflectors (200), and a gripping station (24), where the securing of the reflector (200) is arranged to occur, wherein said holders (14) are moveable from a distance of the gripping station to the gripping station (24) for securing the reflector (200) and said connecting members comprise a gliding surface (22), which has a first end and a second end, said gripping station (24) is in the first end of the gliding surface and there is a first side plate (25) on the first side and a second side plate (26) on the second side of the gliding surface (22), so that the gliding surface (22) and side plates (25, 26) form a trough, in which trough the aerial line (100) can be fitted, **characterised in that** the number of said holders (14) is dimensioned for loading several reflectors (200) into the device at once.

2. The device according to claim 1, **characterized in that** said installation mechanism comprises remote-controllable or at least partly automatic transfer means for moving the holders (14).

3. The device according to claim 2, **characterized in that** said transfer means comprise at least one unending chain (16), onto which chain (16) the holders (14) are arranged at a distance from each other, and which chain (16) has a movement path, which has a point which is tangential to or runs close to the gripping station.

4. The device according to claim 2 or 3, **characterized in that** said transfer means comprise two parallel unending chains (16), onto which chains (16) holders (14) have been arranged at a distance from each other, so that the holders (14) are substantially aligned on said parallel chains (16).

5. The device according to claim 3 or 4, **characterized in that** said transfer means comprise at least two rotation axles (18a, 18b), around which the chain/chains (16) are arranged to rotate and a motor (20) for rotating the chain/chains (16).

6. The device according to any of the claims 1-5, **characterized in that** the gliding surface (22) has a sensor (30) for measuring a load directed at the gliding surface and indicator means for indicating the measured load to the device user.

7. The device according to claim 6, **characterized in that** said indicator means comprise at least one light-emitting indicator light (32), the wavelength of the light of which is arranged to be determined based on the magnitude of the measured load.

8. The device according to any of the claims 1-7, **characterized in that** it further comprises distance measuring instruments for measuring the distance the device has moved along the aerial line (100).

9. The device according to any of the claims 1-8, **characterized in that** it further comprises a magazine for storing reflectors (200) and feeding them into the installation mechanism.

10. A method for securing objects (200), such as reflectors or measuring instruments, to an aerial line (100) with a device, which comprises a frame (10), a suspension member (12) for suspending from a flight device (300), connecting members for connecting to an aerial line (100) and an installation mechanism for securing at least one object (200) to an aerial line (100), in which method objects (200) are loaded into said device, said device is suspended from a flight device (300), the flight device (300) is flown above the aerial line (100), said device is connected to the aerial line (100) and the device is used to secure a first object (200) to the aerial line (100) at a first securing point, wherein said connecting members comprise a gliding surface (22), a first side plate (25) on the first side and a second side plate (26) on the second side of the gliding surface (22), so that the gliding surface (22) and side plates (25, 26) form a trough, and in the method, the device is connected to the aerial line (100) by moving the device in relation to the aerial line (100) into a position, where the aerial line is placed into said trough, **characterised in that** the device connected to the aerial line (100) is moved along the aerial line (100) to a second securing point at a distance from the first securing point, and the device is used to secure a second object (200) to the aerial line (100) at the second securing point.

11. The method according to claim 10, **characterized in that** in the method, the device connected to the aerial line (100) is moved along the aerial line (100) from the securing point of the last secured object (200) to the next securing point at a distance from the securing point of the last secured object (200) and the next object (200) is secured with the device to the aerial line (100) at the next securing point.

12. The method according to claim 10 or 11, **characterized in that** said installation mechanism is configured to secure objects (200) to the aerial line (100) automatically at a desired distance from each other as the device moves along the aerial line (100).

13. The method according to any of the claims 10-12, **characterized in that** the lifting force directed by said device onto the aerial line (100) is measured, when the device is moved along the aerial line (100), and if necessary, the device is lifted or lowered in order to keep the desired lifting force directed onto the aerial line (100).

14. The method according to any of the claims 10-13, **characterized in that** the method is used for securing reflectors or other objects promoting detection of the aerial line to an aerial line (100) of a power line.

15. The method according to any of the claims 10-14, **characterized in that** the device is suspended from a flight device with a substantially rigid bar, and the angle between the bar and device is adjusted, when the device is moved along the aerial line (100).

## Patentansprüche

1. Vorrichtung zum Befestigen von Reflektoren (200) an einer Luftleitung (100), wobei die Vorrichtung einen Rahmen (10), ein Aufhängeelement (12) zum Aufhängen an einem Fluggerät, Verbindungselemente zum Verbinden mit einer Luftleitung (100), einen Installationsmechanismus zum Befestigen mindestens eines Reflektors (200) an einer Luftleitung (100) umfasst, wobei der Installationsmechanismus eine Gruppe beweglicher Halter (14) zum Aufnehmen, Tragen und Freigeben von Reflektoren (200) und eine Greifstation (24) umfasst, an der die Befestigung des Reflektors (200) erfolgt, wobei die Halter (14) von einer Greifstation zu einer Greifstation (24) bewegbar sind, um den Reflektor (200) zu befestigen, und die Verbindungselemente eine Gleitfläche (22) umfassen, die ein erstes und ein zweites Ende aufweist, wobei sich die Greifstation (24) am ersten Ende der Gleitfläche befindet und sich auf der ersten Seite eine erste Seitenplatte (25) und auf der zweiten Seite der Gleitfläche (22) eine zweite Seitenplatte (26) befindet, so dass die Gleitfläche (22) und die Seitenplatten (25, 26) eine Wanne bilden, wobei in der Wanne die Antennenleitung (100) angebracht werden kann, **dadurch gekennzeichnet, dass** die Anzahl der Halter (14) so bemessen ist, dass mehrere Reflektoren (200) gleichzeitig in die Vorrichtung eingesetzt werden können.

2. Vorrichtung nach Anspruch 1, **dadurch gekennzeichnet, dass** der Installationsmechanismus fernsteuerbare oder zumindest teilweise automatische Übertragungsmittel zum Bewegen der Halter (14) umfasst.

3. Vorrichtung nach Anspruch 2, **dadurch gekennzeichnet, dass** die Übertragungsmittel mindestens eine endlose Kette (16) umfassen, wobei auf der Kette (16) die Halter (14) in einem Abstand voneinander angeordnet sind, und wobei Kette (16) einen Bewegungspfad aufweist, der einen Punkt aufweist, der tangential zur Greifstation ist oder in der Nähe dieser verläuft.

4. Vorrichtung nach Anspruch 2 oder 3, **dadurch gekennzeichnet, dass** die Übertragungsmittel zwei parallele, endlose Ketten (16) umfassen, wobei auf den Ketten (16) die Halter (14) in einem Abstand voneinander angeordnet sind, so dass die Halter (14) im Wesentlichen auf den parallelen Ketten (16) ausgerichtet sind.

5. Vorrichtung nach Anspruch 3 oder 4, **dadurch gekennzeichnet, dass** die Übertragungsmittel mindestens zwei Drehachsen (18a, 18b), um die die Kette/Ketten (16) drehbar angeordnet sind, und einen Motor (20) zum Drehen der Kette/Ketten (16) umfassen.

6. Vorrichtung nach einem der Ansprüche 1 bis 5, **dadurch gekennzeichnet, dass** die Gleitfläche (22) einen Sensor (30) zum Messen einer auf die Gleitfläche gerichteten Last und eine Anzeigeeinrichtung zum Anzeigen der gemessenen Last für den Benutzer der Vorrichtung aufweist.

7. Vorrichtung nach Anspruch 6, **dadurch gekennzeichnet, dass** die Anzeigemittel mindestens eine lichtemittierende Anzeigelampe (32) umfassen, deren Lichtwellenlänge auf der Grundlage der Größe der gemessenen Last bestimmt werden kann.

8. Vorrichtung nach einem der Ansprüche 1 bis 7, **dadurch gekennzeichnet, dass** sie außerdem Entfernungsmessgeräte zum Messen der Entfernung umfasst, die die Vorrichtung entlang der Luftleitung (100) zurückgelegt hat.

9. Vorrichtung nach einem der Ansprüche 1 bis 8, **dadurch gekennzeichnet, dass** sie außerdem ein Magazin zum Aufbewahren von Reflektoren (200) und zum Zuführen derselben in den Installationsmechanismus umfasst.

10. Verfahren zum Befestigen von Objekten (200), wie beispielsweise Reflektoren oder Messinstrumenten, an einer Luftleitung (100), mit einer Vorrichtung, die einen Rahmen (10), ein Aufhängeelement (12) zum Aufhängen an einem Fluggerät (300), Verbindungselemente zum Verbinden mit einer Luftleitung (100) und einen Installationsmechanismus zum Befestigen mindestens eines Objekts (200) an einer Luftleitung (100) umfasst, wobei bei dem Verfahren Objekte (200) in die Vorrichtung geladen werden, die Vorrichtung an einem Fluggerät (300) aufgehängt wird, das Fluggerät (300) über der Luftleitung (100) fliegt, die Vorrichtung mit der Luftleitung (100) verbunden wird und die Vorrichtung verwendet wird, um ein erstes Objekt (200) an einem ersten Befestigungspunkt an der Luftleitung (100) zu befestigen, wobei die Verbindungselemente eine Gleitfläche (22), eine erste Seitenplatte (25) auf der ersten Seite und eine zweite Seitenplatte (26) auf der zweiten Seite der Gleitfläche (22) umfassen, so dass die Gleitfläche (22) und die Seitenplatten (25, 26) eine Wanne bilden, und wobei bei dem Verfahren die Vorrichtung mit der Luftleitung (100) verbunden wird, indem die Vorrichtung in Bezug auf die Luftleitung (100) in eine Position bewegt wird, in der die Luftleitung in die Wanne gelegt wird,
**dadurch gekennzeichnet, dass** die mit der Luftleitung (100) verbundene Vorrichtung entlang der Luftleitung (100) zu einem zweiten Befestigungspunkt bewegt wird, der vom ersten Befestigungspunkt beabstandet ist, und dass mit der Vorrichtung ein zweites Objekt (200) an der Luftleitung (100) am zweiten Befestigungspunkt befestigt wird.

11. Verfahren nach Anspruch 10, **dadurch gekennzeichnet, dass** bei dem Verfahren die an die Luftleitung (100) angeschlossene Vorrichtung vom Sicherungspunkt des zuletzt gesicherten Objekts (200) entlang der Luftleitung (100) zu dem nächsten Sicherungspunkt im Abstand vom Sicherungspunkt des zuletzt gesicherten Objekts (200) bewegt wird und am nächsten Sicherungspunkt das nächste Objekt (200) mit der Vorrichtung an der Luftleitung (100) gesichert wird.

12. Verfahren nach Anspruch 10 oder 11, **dadurch gekennzeichnet, dass** der Installationsmechanismus so konfiguriert ist, dass er Objekte (200) automatisch in einem gewünschten Abstand voneinander an der Luftleitung (100) befestigt, während sich die Vorrichtung entlang der Luftleitung (100) bewegt.

13. Verfahren nach einem der Ansprüche 10 bis 12, **dadurch gekennzeichnet, dass** die von der Vorrichtung auf die Luftleitung (100) ausgeübte Hubkraft gemessen wird, wenn die Vorrichtung entlang der Luftleitung (100) bewegt wird, und die Vorrichtung bei Bedarf angehoben oder abgesenkt wird, um die gewünschte, auf die Luftleitung (100) ausgeübte Hubkraft beizubehalten.

14. Verfahren nach einem der Ansprüche 10 bis 13, **dadurch gekennzeichnet, dass** das Verfahren zur Befestigung von Reflektoren oder anderen die Erkennung der Luftleitung fördernden Objekten an einer Luftleitung (100) einer Stromleitung eingesetzt wird.

15. Verfahren nach einem der Ansprüche 10 bis 14, **dadurch gekennzeichnet, dass** die Vorrichtung mit einer im Wesentlichen starren Stange an einem Fluggerät aufgehängt ist und der Winkel zwischen Stange und Vorrichtung eingestellt wird, wenn die Vorrichtung entlang der Luftleitung (100) bewegt wird.

## Revendications

1. Dispositif de fixation de réflecteurs (200) à une ligne aérienne (100), lequel dispositif comprend un cadre (10), un élément de suspension (12) à suspendre à un dispositif de vol, des éléments de connexion pour se connecter à une ligne aérienne (100), un mécanisme d'installation permettant de fixer au moins un réflecteur (200) à une ligne aérienne (100), lequel mécanisme d'installation comprend un groupe de supports mobiles (14) destinés à recevoir, transporter et libérer des réflecteurs (200), et une station de préhension (24), où la fixation du réflecteur (200) est agencée pour se produire, dans lequel
lesdits supports (14) sont mobiles d'une certaine distance de la station de préhension à la station de préhension (24) pour fixer le réflecteur (200) et lesdits éléments de connexion comprennent une surface de glissement (22), qui a une première extrémité et une seconde extrémité, ladite station de préhension (24) est dans la première extrémité de la surface de glissement et il y a une première plaque latérale (25) sur le premier côté et une seconde plaque latérale (26) sur le second côté de la surface de glissement (22), de sorte que la surface de glissement (22) et les plaques latérales (25, 26) forment un creux, dans lequel creux la ligne aérienne (100) peut être montée, **caractérisé en ce que** le nombre desdits supports (14) est dimensionné pour charger plusieurs réflecteurs (200) dans le dispositif à la fois.

2. Dispositif selon la revendication 1, **caractérisé en ce que** ledit mécanisme d'installation comprend des moyens de transfert télécommandables ou au moins partiellement automatiques pour déplacer les supports (14).

3. Dispositif selon la revendication 2, **caractérisé en ce que** lesdits moyens de transfert comprennent au moins une chaîne sans fin (16), sur laquelle chaîne (16) les supports (14) sont agencés à une certaine distance les uns des autres, et laquelle chaîne (16) a un trajet de déplacement, qui a un point qui est tangentiel ou qui passe à proximité de la station de préhension.

4. Dispositif selon la revendication 2 ou 3, **caractérisé en ce que** lesdits moyens de transfert comprennent deux chaînes sans fin (16) parallèles, sur lesquelles chaînes (16) des supports (14) ont été agencés à une certaine distance les uns des autres, de sorte que les supports (14) sont sensiblement alignés sur lesdites chaînes (16) parallèles.

5. Dispositif selon la revendication 3 ou 4, **caractérisé en ce que** lesdits moyens de transfert comprennent au moins deux essieux de rotation (18a, 18b), autour desquels la ou les chaînes (16) sont agencées pour tourner et un moteur (20) pour faire tourner la ou les chaînes (16).

6. Dispositif selon l'une quelconque des revendications 1 à 5, **caractérisé en ce que** la surface de glissement (22) a un capteur (30) pour mesurer une charge dirigée au niveau de la surface de glissement et des moyens indicateurs pour indiquer la charge mesurée à l'utilisateur du dispositif.

7. Dispositif selon la revendication 6, **caractérisé en ce que** lesdits moyens indicateurs comprennent au moins un voyant lumineux électroluminescent (32), dont la longueur d'onde de la lumière est agencée pour être déterminée sur la base de l'amplitude de la charge mesurée.

8. Dispositif selon l'une quelconque des revendications 1 à 7, **caractérisé en ce qu'**il comprend en outre des instruments de mesure de distance pour mesurer la distance parcourue par le dispositif le long de la ligne aérienne (100).

9. Dispositif selon l'une quelconque des revendications 1 à 8, **caractérisé en ce qu'**il comprend en outre un magasin pour stocker des réflecteurs (200) et les introduire dans le mécanisme d'installation.

10. Procédé de fixation d'objets (200), tels que des réflecteurs ou des instruments de mesure, à une ligne aérienne (100) avec un dispositif qui comprend un cadre (10), un élément de suspension (12) à suspendre à un dispositif de vol (300), des éléments de connexion pour se connecter à une ligne aérienne (100) et un mécanisme d'installation permettant de fixer au moins un objet (200) à une ligne aérienne (100), dans lequel procédé des objets (200) sont chargés dans ledit dispositif, ledit dispositif est suspendu à un dispositif de vol (300), le dispositif de vol (300) est piloté au-dessus de la ligne aérienne (100), ledit dispositif est connecté à la ligne aérienne (100) et le dispositif est utilisé pour fixer un premier objet (200) à la ligne aérienne (100) au niveau d'un premier point de fixation, dans lequel lesdits éléments de connexion comprennent une surface de glissement (22), une première plaque latérale (25) sur le premier côté et une seconde plaque latérale (26) sur le second côté de la surface de glissement (22), de sorte que la surface de glissement (22) et les plaques latérales (25, 26) forment un creux, et dans le procédé, le dispositif est connecté à la ligne aérienne (100) en déplaçant le dispositif par rapport à la ligne aérienne (100) dans une position, où la ligne aérienne est placée dans ledit creux, **caractérisé en ce que** le dispositif connecté à la ligne aérienne (100) est déplacé le long de la ligne aérienne (100) jusqu'à un second point de fixation à une certaine distance du premier point de fixation, et le dispositif est utilisé pour fixer un second objet (200) à la ligne aérienne (100) au niveau du second point de fixation.

11. Procédé selon la revendication 10, **caractérisé en ce que**, dans le procédé, le dispositif connecté à la ligne aérienne (100) est déplacé le long de la ligne aérienne (100) du point de fixation du dernier objet fixé (200) au point de fixation suivant à une certaine distance du point de fixation du dernier objet fixé (200) et l'objet suivant (200) est fixé avec le dispositif à la ligne aérienne (100) au niveau du point de fixation suivant.

12. Procédé selon la revendication 10 ou 11, **caractérisé en ce que** ledit mécanisme d'installation est configuré pour fixer automatiquement des objets (200) à la ligne aérienne (100) à une certaine distance souhaitée les uns des autres lorsque le dispositif se déplace le long de la ligne aérienne (100).

13. Procédé selon l'une quelconque des revendications 10 à 12, **caractérisé en ce que** la force de levage dirigée par ledit dispositif sur la ligne aérienne (100) est mesurée, lorsque le dispositif est déplacé le long de la ligne aérienne (100), et si nécessaire, le dispositif est levé ou abaissé afin de maintenir la force de levage souhaitée dirigée sur la ligne aérienne (100).

14. Procédé selon l'une quelconque des revendications 10 à 13, **caractérisé en ce que** le procédé est utilisé pour fixer des réflecteurs ou d'autres objets favorisant la détection de la ligne aérienne à une ligne aérienne (100) d'une ligne électrique.

15. Procédé selon l'une quelconque des revendications 10 à 14, **caractérisé en ce que** le dispositif est suspendu à un dispositif de vol avec une barre sensiblement rigide, et l'angle entre la barre et le dispositif est réglé, lorsque le dispositif est déplacé le long de la ligne aérienne (100).
